# EUROPEAN PATENT APPLICATION

(11) **EP 1 164 719 A1**
(43) Date of publication of application: **19.12.2001**
(21) Application number: 00900042.3
(22) Date of filing: 04.01.2000
(51) Int. Cl.: H04B 7/26, H04B 7/04

(54) **CELLULAR TELEPHONE**

(71) Applicant: MITSUBISHI DENKI KABUSHIKI KAISHA, Tokyo 100-8310 (JP)
(72) Inventor: NAGANO, Hiroaki, Mitsubishi Denki Kabushiki Kaisha, Tokyo 100-8310 (JP); FUKUYAMA, Shinjiro, Mitsubishi Denki Kabushiki K., Tokyo 100-8310 (JP); ITOH, Kenji, Mitsubishi Denki Kabushiki Kaisha, Tokyo 100-8310 (JP)
(74) Representative: Popp, Eugen, Dr.
(86) International application number: JP0000004
(87) International publication number: WO0150636

(57) **Abstract**

A dual mode portable telephone according to the present invention is a portable telephone of a diversity type that can be used in both of the W-CDMA system and the PDC system and includes: a transmit/receive antenna (1); a receive antenna (2); a transmit circuit (11) and receive circuit (12) of the W-CDMA system; a transmit circuit (13) and receive circuit (14) of the PDC system; switches (SW1 to SW3) for selectively coupling the antennas (1, 2) with the W-CDMA circuits (11, 12) or the PDC circuits (13, 14); and a band branching filter (3).

## Description

### Portable Telephone

### Technical Field

The present invention relates to a portable telephone and particularly, to a portable telephone of a diversity type that can be used in both of a continuous transmit/receive system performing continuous transmission/reception of a signal and a time-division transmit/receive system performing time-divisional transmission/reception of a signal.

### Background Art

The PDC system, a kind of the TDMA system performing time-divisional transmission/reception of a signal, has been heretofore adopted in the portable telephone related industry. Furthermore, diversity techniques have been employed in which two antennas are provided for a portable telephone and receive speech data is reproduced on the basis of levels of signal received by the two antennas.

On the other hand, a transition from the above described PDC system to the W-CDMA system performing a continuous transmission/reception of a signal has been planned in connection with technologies of a portable telephone. During this transition, a time period is expected to come in which both systems of PDC and W-CDMA co-exist; therefore, it is also expected that the need arises for a dual mode portable telephone that can be used in both systems.

However, when the dual mode portable telephone is constructed from two equipments of respective both types in a simple combination, a resulted equipment becomes of a large size and especially, if the diversity techniques were implemented in each of both systems, 4 antennas would be required, which further increases an equipment size.

### Disclosure of the Invention

It is accordingly an object of the present invention to provide a portable telephone that can be used in both of the continuous transmit/receive system and the time-division transmit/receive system, in which systems a diversity technique can be realized, and which is capable of shrinking a size thereof.

The object of the present invention can be achieved by providing a portable telephone of a diversity type that can be used in both of a continuous transmit/receive system performing continuous transmission/reception of a signal and a time-division transmit/receive system performing time-divisional transmission /reception of a signal, including: first and second antennas provided spaced apart from each other; a first transmit/receive circuit for transmitting/receiving a signal to/from a base station for the continuous transmit/receive system; a second transmit/receive circuit for transmitting/receiving a signal to/from a base station for the time-division transmit/receive system; a judging circuit judging one of the continuous transmit/receive system and the time-division transmit/receive system as a main system and the other as a monitor system on the basis of receive signals of the first and second transmit/receive circuits; and a coupler coupling the first or second transmit/receive circuit corresponding to a system judged as a main system by the judging circuit with the first and second antennas in a main system operation in which a signal is transmitted/received to/from a base station for a main system, while coupling the first or second transmit/receive circuit corresponding to a system judged as a monitor system by the judging circuit with the first and second antennas in monitoring in which a signal is received from a base station for a monitor system.

A main advantageous point of the present invention is that a portable telephone of the present invention can be used in both of the continuous transmit/receive system and the time-division transmit/receive system, in which systems diversity techniques can be realized, and which is capable of shrinking a size thereof since two antennas can be shared by both systems.

It is preferable that the coupler includes: a first filter provided between the first antenna and the first transmit/receive circuit and passing only a signal of the continuous transmit/receive system therethrough; a second filter provided between the first antenna and the second transmit/receive circuit and passing only a signal of the time-division transmit/receive system therethrough; and a switching circuit coupling the second antenna and the first transmit/receive circuit with each other in a case where the first transmit/receive circuit is used, while coupling not only the first antenna and the second transmit/receive circuit with each other through the second filter but also the second antenna and the second transmit/receive circuit with each other in a case where the second transmit/receive circuit is used. In this aspect, since the first antenna for use in transmission/reception of a signal and each of the first and second transmit/receive circuits are coupled through a filter, a power loss of the signal in transmission can be restricted to a low level. Furthermore, since the switch circuit can be integrated into circuitry, a size of an equipment can be shrunk.

It is further preferable that the coupler includes a first filter provided between the first antenna and the first transmit/receive circuit and passing only a signal of the continuous transmit/receive system therethrough; a second filter provided between the first antenna and the second transmit/receive circuit and passing only a signal of the time-division transmit/receive system therethrough; a circulator giving a receive signal to the second transmit/receive circuit through a second input/output port thereof, the receive signal being given to a first input/output port thereof through the first antenna and the second filter, while giving a transmit signal to the first antenna through the first input/output port thereof and the second filter, the transmit signal being given to a third input/output port thereof from the second transmit/receive circuit; and a switching circuit coupling the second antenna and the first transmit/receive circuit with each other in a case where the first transmit/receive circuit is used, while coupling the second antenna and the second transmit/receive circuit in a case where the second transmit/receive circuit is used. In this aspect, since the circulator is used, control of the switching circuit can be simplified.

It is still further preferable that the coupler includes: first and second filters, respectively, provided between each of the first and second antennas, and the first transmit/receive circuit and passing only a signal of the continuous transmit/receive system therethrough; third and fourth filters, respectively, provided between each of the first and second antennas, and the second transmit/receive circuit and passing only a signal of the time-division transmit/receive system therethrough; and a circulator giving a receive signal to the second transmit/receive circuit through a second input/output port, the receive signal being given to a first input/output port through the first antenna and the third filter, while giving a transmit signal to the first antenna through the first input/output port and the third filter, the transmit signal being given to a third input/output port from the second transmit/receive circuit. In this aspect, since the first to fourth filters and the circulator are used, a power loss is reduced and no control by the coupler is necessary.

It is yet further preferable that the coupler includes: first and second filters, respectively, provided between each of the first and second antenna, and the first transmit/receive circuit and passing only a signal of the continuous transmit/receive system; third and fourth filters, respectively, provided between the first and second antennas, and the second transmit/receive circuit and passing only a signal of the time-division transmit/receive system therethrough; and a switching circuit giving a transmit signal outputted from the second transmit/receive circuit to the first antenna through the third filter in transmission of the second transmit/receive circuit, while giving a receive signal of the first antenna to the second transmit/receive circuit through the third filter in reception of the second transmit/receive circuit. In this aspect, since the first to fourth filters and the switch circuit are used, a power loss can be reduced and a size of an equipment can be shrunk.

It is further preferable that the first transmit/receive circuit generates receive speech data on the basis of receive signals from the first and second antennas and the second transmit/receive circuit selects a signal of a higher signal level of receive signals from the first and second antennas and generates receive speech data on the basis of the selected receive signal. In this aspect, since receive signals from the first and second are combined or a signal of a higher signal level of the receive signals is selected, signal reception can be performed with high sensitivity.

### Brief Description of the Drawings

Fig. 1 is a circuit block diagram representing a main part of a dual mode portable telephone according to a first embodiment of the present invention;
Fig. 2 is a frequency spectrum chart of signals of the W-CDMA system and the PCD system employed in the dual mode portable telephone shown in Fig. 1;
Fig. 3 is a table for describing operation of the dual mode portable telephone shown in Fig. 1;
Fig. 4 is a time chart for describing operation of the dual mode portable telephone shown in Fig. 1;
Fig. 5 is another time chart for describing operation of the dual mode portable telephone shown in Fig. 1;
Fig. 6 is a circuit block diagram representing an example modification of this embodiment;
Fig. 7 is a table for describing operation of the dual mode portable telephone shown in Fig. 6;
Fig. 8 is a circuit block diagram representing another example modification of this embodiment;
Fig. 9 is a table for describing operation of the dual mode portable telephone shown in Fig. 8;
Fig. 10 is a circuit block diagram representing still another example modification of this embodiment; and
Fig. 11 is a table for describing operation of the dual mode portable telephone shown in Fig. 10.

### Best Mode for Carrying Out the Invention

Detailed description will be given of a dual mode portable telephone relating to the present invention below with reference to the accompanying drawings.

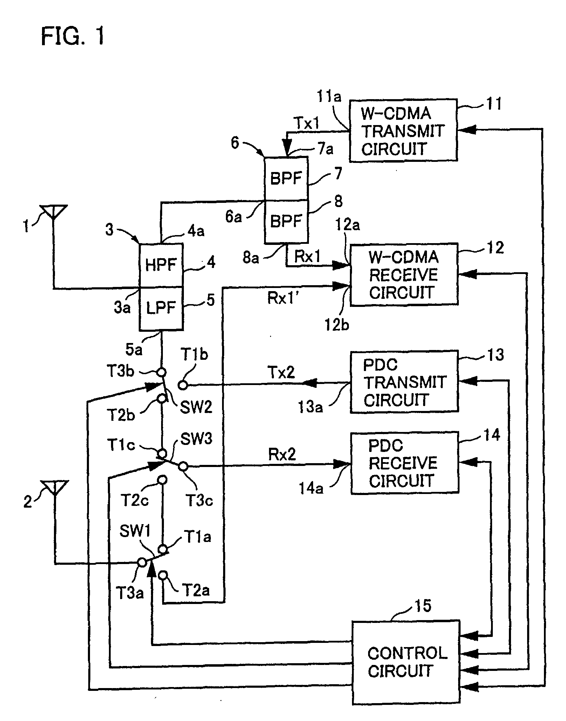

Referring to Fig. 1, the dual mode portable telephone includes: a transmit/receive antenna 1; a receive antenna 2, band branching filters 3 and 6; switches SW1 to SW3; a W-CDMA transmit circuit 11; a W-CDMA receive circuit 12; a PDC transmit circuit 13; a PDC receive circuit 14; and a control circuit 15.

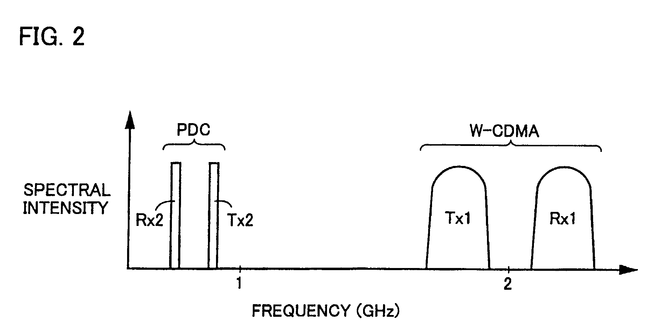

The transmit/receive antenna 1 is used in transmission/reception in both of the W-CDMA system and the PDC system. As shown in Fig. 2, a transmit signal Tx1 and receive signal Rx1 of the W-CDMA system have frequencies of the order of 2 GHz and a transmit signal Tx2 and receive signal Rx2 of the PCD system have frequencies of the order of 0.8 GHz. Since such signals of the two systems having respective different frequencies are transmitted/received, the transmit/receive antenna 1 has been constructed so as to have two resonance points. The receive antenna 2 also has two resonance points and is used in reception of signals of the W-CDMA system and the PDC system. With the two antennas 1 and 2 adopted, a diversity system is realized.

The band branching filter 3 includes: a high pass filter (HPF) 4; a low pass filter (LPF) 5; and three input/output ports 3a to 5a. The port 3a is connected to the transmit/receive antenna 1. The signals Tx1 and Rx1 of the W-CDMA system are transmittable through a route from the port 3a, to the high pass filter 4 and to the port 4a and the signals Tx2 and Rx2 of the PDC system are transmittable through a route from the port 3a, to the low pass filter 5 and to the port 5a.

The band branching filter 6 includes band pass filters (BPF) 7 and 8; and three port 6a to 8a. The ports 6a to 8a are connected to the port 4a of the band branching filter 3, an output terminal 11a of the W-CDMA transmit circuit 11 and a first input terminal 12a of the W-CDMA receive circuit 12, respectively. The receive signal Tx1 (1920 to 1980 MHz) of the W-CDMA system is transmittable through a route from the port 7a, to the band pass filter 7 and to the port 6a and the receive signal Rx1 (2110 to 2170 MHz) of the W-CDMA system is transmittable through a route from the port 6a, to the band pass filter 8 and to the port 8a.

A common terminal T3a of the switch SW1 is connected to the receive antenna 2, a first switching terminal T1a is connected to a second switching terminal T2c of the switch SW3 and a second terminal T2a of the switch SW1 is connected to a second input terminal 12b of the W-CDMA receive circuit 12. The switch SW1 is switching-controlled by a control circuit 15. Definition is here given such that a state in which a route between terminals T1a and T3a is conductive is referred to as "state 1" and a state in which a route between terminals T2a and T3a is conductive is referred to as "state 2."

A common terminal T3b of the switch SW2 is connected to the port 5a of the band branching filter 3, a first switching terminal T1b thereof is connected to an output terminal 13a of a PDC transmit circuit 13 and a second switching terminal T2b thereof is connected to a first switching terminal T1c of the switch SW3. The switch SW2 is switching-controlled by the control circuit 15. Definition is again here given such that a state in which a route between the terminals T1b and T3b is conductive is referred to as "state 1" and state in which a route between the terminals T2c and T3c is conductive is referred to as "state 2."

The W-CDMA transmit circuit 11 is activated in a case where the W-CDMA system is a main system and a transmit signal Tx1 is generated according to transmit speech data generated on the basis of speech of a user of the portable telephone. The transmit signal Tx1 is given to the transmit/receive antenna 1 through the band pass filter 7 and the high pass filter 4.

The W-CDMA receive circuit 12 combines a signal Rx1 received by the transmit/receive antenna 1 and given through the high pass filter 4 and the band pass filter 8 and a signal Rx1' received by the receive antenna 2 and given through the switch SW1 to synthesize receive speech data. The receive speech data is converted to speech to transmit the speech to the user of the portable telephone.

Furthermore, the W-CDMA receive circuit 12 monitors information from the base station for the W-CDMA system on the basis of the receive signals Rx1 and Rx1' in monitoring in a case of the PDC system is a main system. The reason why the information from the base station for the W-CDMA system is monitored in such a way is that swift transition to the W-CDMA system is realized when a signal level from the base station for the PDC system decreases.

The PDC transmit circuit 13 is activated in a case where the PDC system is a main system and a transmit signal Tx2 is generated according to transmit speech data. The transmit signal Tx2 is given to the transmit/receive antenna 1 through the switch SW2 and the low pass filter 5.

The PDC receive circuit 14 generates receive speech data in the main system operation in a case where the PDC system is a main system on the basis of a signal Rx2 received by the transmit/receive antenna 1 and given through the low pass filter 5 and the switches SW2 and SW3, or a signal Rx2 received by the receive antenna 2 and given through the switches SW1 and SW3.

Furthermore, the PDC receive circuit 14 monitors information from the base station for the PDC system on the basis of the signal Rx2 in monitoring in a case where the W-CDMA system is a main system. The reason why the information from the base station for the PDC system is monitored in such a way is that swift transition to the PDC system is realized when a signal level from the base station for the W-CDMA system decreases.

The control circuit 15 judges which of signal levels of the W-CDMA system and the PDC system is higher on the basis of signals from the receive circuits 12 and 14 and selects a system of a higher signal level as a main system, while specifying a system of a lower signal level as a monitor system. The control circuit 15 controls the switches SW1 to SW3, the transmit circuits 11 and 13, and the receive circuits 12 and 14.

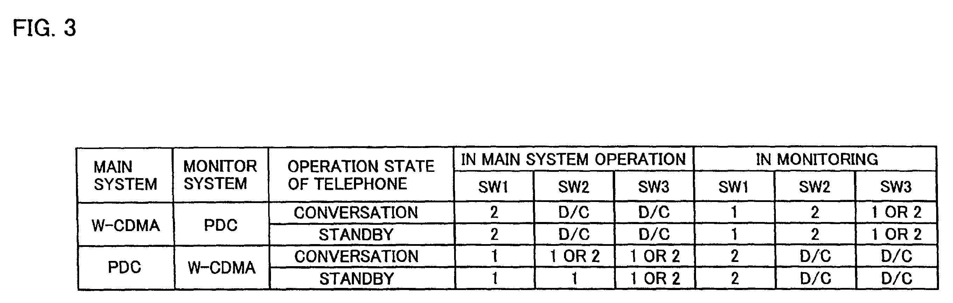

Fig. 3 is a table for representing states of the switches SW1 to SW3. Description will be given of operation of the portable telephone below with reference to Fig. 3.

First of all, the receive signal Rx1 of the W-CDMA system and the receive signal Rx2 of the PDC system are compared with each other by the control circuit 15 and a system of a higher signal level is selected as a main system, while a system of a lower signal level is specified as a monitor system.

In a case where the W-CDMA system is a main system and a telephone is in a conversation state, the switch SW1 enters "state 2" to allow a route between the terminals T2a and T3a to be conductive and the switches SW2 and SW3 is placed into a D/C state (Don't Care) in the main system operation. The signal Rx1 received by the antenna 1 is inputted to the first input terminal 12a of the W-CDMA receive circuit 12 through the high pass filter 4 and the band pass filter 8 and along with the input of the signal Rx1, the signal Rx1' received by the antenna 2 is inputted to the second input terminal 12b of the W-CDMA receive circuit 12 through the switch SW1. The W-CDMA receive circuit 12 generates receive speech data on the basis of the signals Rx1 and Rx1' from the two antennas 1 and 2. That is, a space diversity technique is realized.

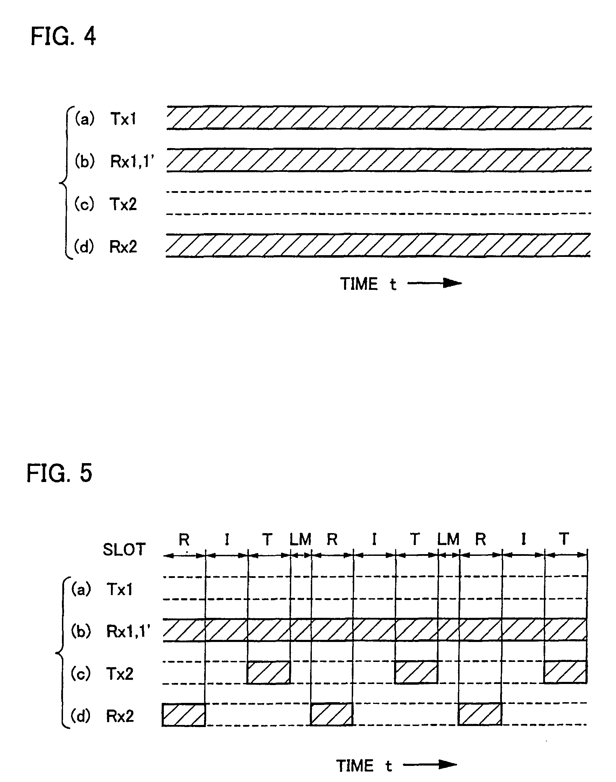

Furthermore, the signal Tx1 generated in the W-CDMA transmit circuit 11 is given to the antenna 1 through the band pass filter 6 and the high pass filter 4 and further transmitted to the base station for the W-CDMA system from the antenna 1. In this case, as shown in Figs. 4(a) and 4(b), the transmit signal Tx1 is continuously transmitted and the receive signals Rx1 and Rx1' are also continuously received. For this reason, the W-CDMA system is called a continuous transmit/receive system.

In a case where the W-CDMA system is a main system and a telephone is in a conversation state, the switch SW1 assumes "state 1" in monitoring to cause a route between the terminals T1a and T3a to be conductive and the switch SW2 assumes "state 2" to cause a route between the terminals T2b and T3b to be conductive, and the switch SW2 assumes "state 1" or "state 2" such that one of a higher signal level of the signal Rx2 received by the antenna 1 and the signal Rx2 received by the antenna 2 is inputted to the PDC received circuit 14. In this case, as shown in Figs. 4(c) and 4(d), outputting of the transmit signal Tx2 is ceased while the receive signal Rx2 is continuously received. The PDC receive circuit 14 monitors information from the base station for the PDC system on the basis of the receive signal Rx2.

In a case where the W-CDMA system is a main system and a telephone is in a call waiting state, the telephone is in the same state as in the conversation state.

In a case where the PDC system is a main system and the telephone is in a conversation state, the switch SW1 assumes "state 1" in the main system operation to cause a route between the terminals T1a and T3a to be conductive and the switch SW2 assumes "state 1" and "state 2" in transmission and reception, respectively, and the switch SW3 assumes "state 1" or "state 2" such that one of a higher signal level of the signal Rx2 received by the antenna 1 and the signal Rx2 received by the antenna 2 is inputted to the PDC receive circuit 14. The one of a higher signal level of the signal Rx2 received by the antenna 1 and the Rx2 received by the antenna 2 is inputted to the PDC receive circuit 14 and the PDC received circuit 14 generates receive speech data on the basis of the signal Rx2 inputted. That is, a space diversity technique is realized.

Furthermore, the signal Tx2 generated by the PDC transmit circuit 13 is given to the antenna 1 through the switch SW2 and the low pass filter 5 and further transmitted to the base station for the PDC system from the antenna 1. In this case, reception of the signal Rx2 and transmission of the signal Tx2 are alternately performed in a time divisional manner. That is, as shown in Figs. 5(c) and 5(d), the signal Rx2 is received in an R (reception) slot, nothing is performed in an I (idle) slot, the transmit signal Tx2 is transmitted in a T (transmission) slot, the signal Rx1 from the antenna 1 and a signal from the antenna 2 are compared with each other in regard to signal intensity in an LM (level measuring) slot to set a state of the switch SW3 and the signal Rx2 is received in the R slot. Therefore, the PDC system is called a time division transmit/receive system.

In a case where the PDC system is a main system and a telephone is in a conversation state, the switch SW1 assumes "state 2" in monitoring to cause a route between the terminals T2a and T3a to be conductive and the switches SW2 and SW3 assume the D/C state. The W-CDMA receive circuit 12 monitors information from the base station for the W-CDMA system on the basis of the signal Rx1 and Rx1' from the antennas 1 and 2.

A case where the PDC system is a main system and a telephone is a standby receive state is basically the same as a case where the telephone is in the conversation state. Since no transmission is performed in the standby receive state, however, the switch SW2 has no chance to assume "state 1."

In this embodiment, using the band branching filter 3 and the switches SW1 to SW3, selective coupling is performed between the two antennas 1 and 2, and the W-CDMA receive system 11 and the W-CDMA transmit system 12 or between the two antennas 1 and 2, and the PDC receive system 13 and the PDC transmit system 14. Therefore, both of the W-CDMA system and the PDC system can be used and further a diversity technique is realized in both system and downsizing of the equipment can be achieved.

Note that why the transmit/receive antenna 1 and the W-CDMA transmit circuit 11 are coupled with each other through the filters 4 and 7 is that a power loss of a signal is restricted to a low level in transmission. Furthermore, the switches SW1 and SW3 can be integrated into circuitry with ease, thereby enabling downsizing of the equipment.

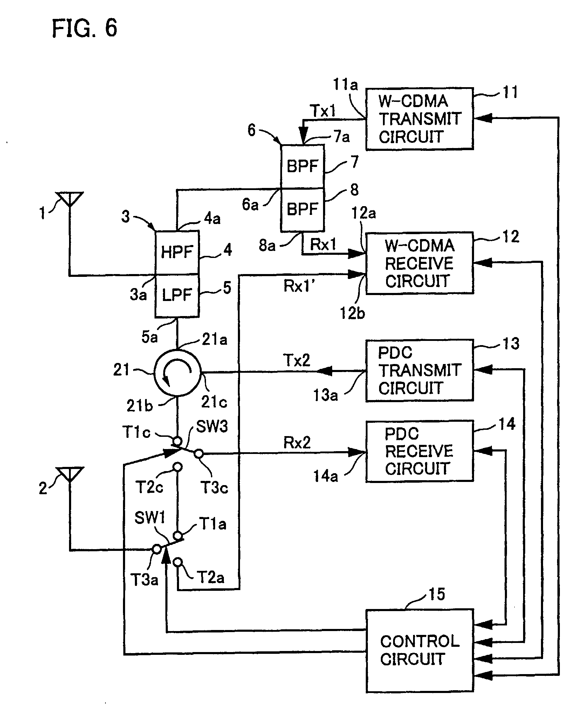

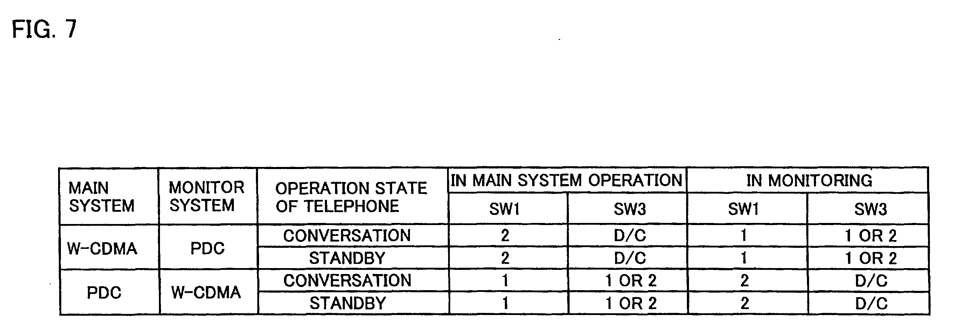

Description will be given of an example modification of this embodiment below. In an example modification of Fig. 6, the switch SW2 of Fig. 1 is replaced with a circulator 21. The circulator 21 includes three input/output ports 21a to 21c. The input/output port 21a to 21c are connected to the port 5a of the band branching filter 3, the first switching terminal T1c of the switch SW3 and the output node 13a of the PDC transmit circuit 13, respectively. The signal Rx2 received by the antenna 1, passing through the low pass filter 5 and inputted to the port 21a is given to the first switching terminal T1c of the switch SW3 through the port 21b. The signal Tx2 generated in the PDC transmit circuit 13 and inputted to the port 21c is given to the input/output port 5a of the band branching filter 3 through the port 21a. Hence, the circulator 21 plays the same role as does the switch SW2. The switches SW1 and SW3, as shown in Fig. 7, are switching-controlled as is similar to the description with reference to Figs. 1 and 3. In this example modification, since no control of the switch SW2 is necessary, simplification of control is realized.

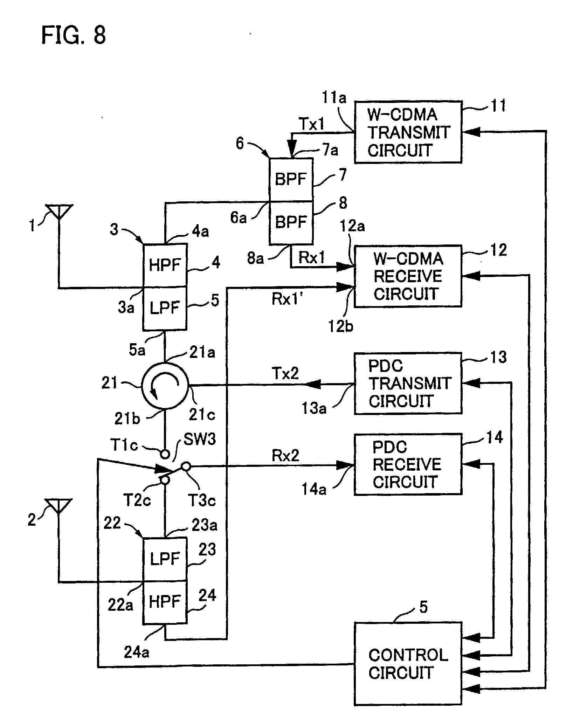

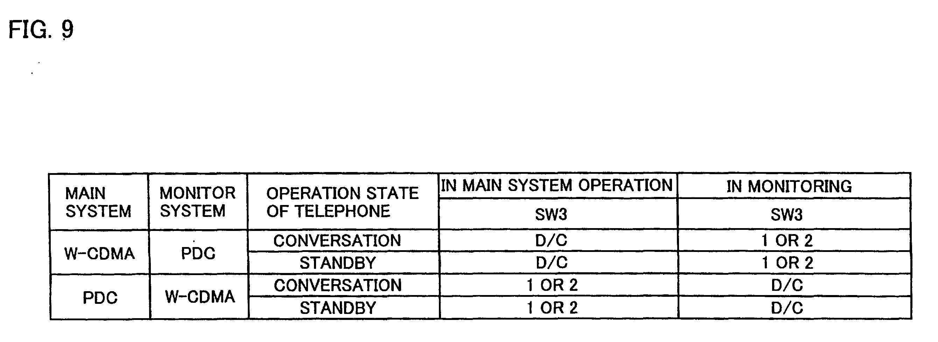

In an example modification of Fig. 8, the switch SW1 of Fig. 6 is replaced with a band branching filter 22. The band branching filter 22 includes: a low pass filter 23; a high pass filter 24; and three input/output ports 22a to 24a. The receive signal Rx1' of the W-CDMA system is transmittable through a route from the port 22a, to the high pass filter 24 and to the port 24a, while the receive signal of the PDC system is transmittable through a route from the port 22a, to the low pass filter 23 and to the port 23a. Therefore, the band branching filter 22 plays the same role as does the switch SW1. The switch SW3, as shown in Fig. 9, is switching-controlled as is similar to the description with reference to Figs.1 and 3. In this example modification, since neither the switch SW1 nor the switch SW2 is necessary to be controlled, simplification of control is realized.

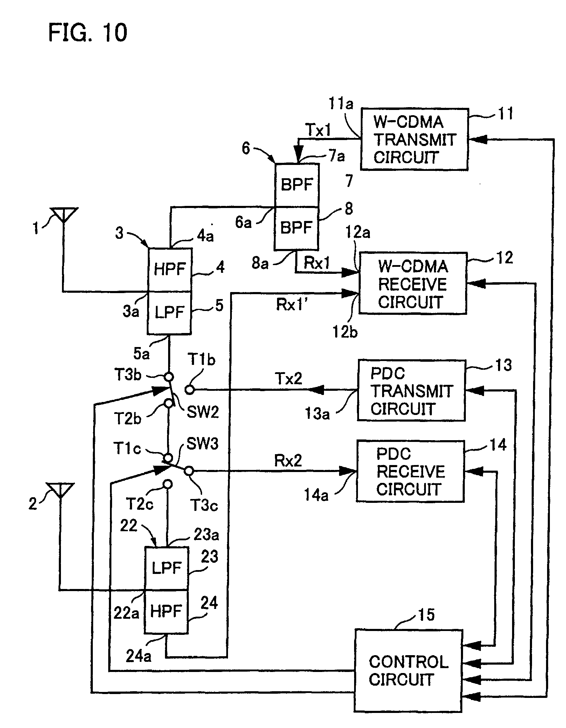

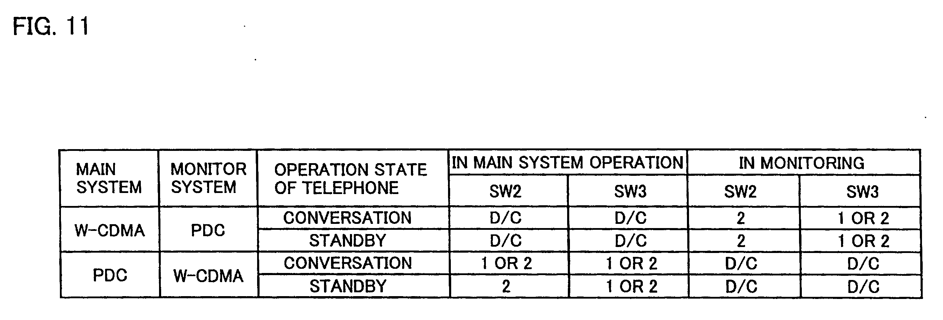

In an example modification of Fig. 10, the circulator 21 of Fig.8 is replaced with the switch SW2. The switches SW2 and SW3, as shown in Fig. 11, are switching-controlled as is similar to the description with reference to Figs. 1 and 3. In this example modification, since no control of the switch SW2 is necessary, simplification of control is realized.

## Claims

1. A portable telephone of a diversity type that can be used in both of a continuous transmit/receive system performing continuous transmission/reception of a signal and a time-division transmit/receive system performing time-divisional transmission /reception of a signal, comprising:
first and second antennas (1, 2) provided spaced apart from each other;
a first transmit/receive circuit (6, 11, 12) for transmitting/receiving a signal to/from a base station for said continuous transmit/receive system;
a second transmit/receive circuit (SW3, 13, 14) for transmitting/receiving a signal to/from a base station for said time-division transmit/receive system;
a judging circuit (15) judging one of said continuous transmit/receive system and said time-division transmit/receive system as a main system and the other as a monitor system on the basis of receive signals of said first and second transmit/receive circuits (SW3, 6, 11 to 14); and
a coupler (4, 5, SW1, SW2, 21, 23, 24) coupling said first or second transmit/receive circuit (6, 11, 12 or SW3, 13, 14) corresponding to a system judged as a main system by said judging circuit (15) with said first and second antennas (1, 2) in a main system operation in which a signal is transmitted/received to/from a base station for the main system, while coupling said first or second transmit/receive circuit (6, 11, 12 or SW3, 13, 14) corresponding to a system judged as a monitor system by said judging circuit (15) with said first and second antennas (1, 2) in monitoring in which a signal is received from a base station for a monitor system.

2. The portable telephone according to claim 1, wherein said coupler (4, 5, SW1, SW2) comprises:
a first filter (4) provided between said first antenna (1) and said first transmit/receive circuit (6, 11, 12), passing a signal of said continuous transmit/receive system therethrough and suppressing a signal of said time-division transmit/receive system;
a second filter (5) provided between said first antenna (1) and said second transmit/receive circuit (SW3, 13, 14), passing a signal of said time-division transmit/receive system therethrough and suppressing a signal of said continuous transmit/receive system; and
a switching circuit (SW1, SW2) coupling said second antenna (2) and said first transmit/receive circuit (6, 11, 16) with each other in a main system operation in case where said continuous transmit/receive system is a main system and in monitoring in a case where said time-division transmit/receive system is a main system, while coupling not only said first antenna (1) and said second transmit/receive circuit (SW3, 13, 14) with each other through said second filter (5) but also said second antenna (2) and said second transmit/receive circuit (SW3, 13, 14) with each other in a main system operation in case where said time-division transmit/receive system is a main system and in monitoring in a case where said continuous transmit/receive system is a main system.

3. The portable telephone according to claim 1, wherein said coupler (4, 5, 21, SW1) comprises:
a first filter (4) provided between said first antenna (1) and said first transmit/receive circuit (6, 11, 12), passing a signal of said continuous transmit/receive system therethrough and suppressing a signal of said time-division transmit/receive system;
a second filter (5) provided between said first antenna (1) and said second transmit/receive circuit (SW3, 13, 14), passing a signal of said time-division transmit/receive system therethrough and suppressing a signal of said continuous transmit/receive system;
a circulator having first to third input/output ports (3a to 5a), giving a receive signal to said second transmit/receive circuit (SW3, 13, 14) through said second input/output port (21b) thereof, said receive signal being given to said first input/output port (21a) thereof through said first antenna (1) and said second filter (5), while giving a transmit signal to said first antenna (1) through said first input/output port (21a) thereof and said second filter (5), the transmit signal being given to said third input/output port (21c) thereof from said second transmit/receive circuit (SW3, 13, 14); and
a switching circuit (SW1) coupling said second antenna (2) and said first transmit/receive circuit (6, 11, 12) with each other in a main system operation in a case where said continuous transmit/receive system is a main system and in monitoring in a case where said time-division transmit/receive system is a main system, while coupling said second antenna (2) and said second transmit/receive circuit (SW3, 13, 14) with each other in a main system operation in a case where said time-division transmit/receive system is a main system and in monitoring in a case where said continuous transmit/receive system is a main system.

4. The portable telephone according to claim 1, wherein said coupler (4, 5, 21, 23, 24) comprises:
first and second filters (4, 24), provided between each of said first and second antennas (1, 2) respectively, and said first transmit/receive circuit (6, 11, 12), passing a signal of said continuous transmit/receive system therethrough and suppressing a signal of said time-division transmit/receive system;
third and fourth filters (5, 23), provided between each of said first and second antennas (1, 2) respectively, and said second transmit/receive circuit (SW3, 13, 14), passing a signal of said time-division transmit/receive system therethrough and suppressing a signal of said continuous transmit/receive system; and
a circulator having first to third input/output ports (21a to 21c), giving a receive signal to said second transmit/receive circuit (SW3, 13, 14) through said second input/output port (21b), said receive signal being given to said first input/output port (21a) through said first antenna (1) and said third filter (5), while giving a transmit signal to said first antenna (1) through said first input/output port (21a) and said third filter (5), said transmit signal being given to said third input/output port (21c) from said second transmit/receive circuit (SW3, 13, 14).

5. The portable telephone according to claim 1, wherein said coupler (4, 5, 23, 24, SW2) comprises:
first and second filters (4, 24), respectively, provided between each of said first and second antennas (1, 2), and said first transmit/receive circuit (6, 11, 12), passing a signal of said continuous transmit/receive system therethrough and suppressing a signal of said time-division transmit/receive system;
third and fourth filters (5, 23), respectively, provided between each of said first and second antennas (1, 2), and said second transmit/receive circuit (SW3, 13, 14), passing a signal of said time-division transmit/receive system therethrough and suppressing a signal of said continuous transmit/receive system; and
a switching circuit (SW2) giving a transmit signal outputted from said second transmit/receive circuit (SW3, 13, 14) to said first antenna (1) through said third filter (5) in transmission of said second transmit/receive circuit (SW3, 13, 14), while giving a receive signal of said first antenna (1) to said second transmit/receive circuit (SW3, 13, 14) through said third filter (5) in reception of said second transmit/receive circuit (SW3, 13, 14).

6. The portable telephone according to claim 1, wherein said first transmit/receive circuit (6, 11, 12) generates receive speech data on the basis of receive signals from said first and second antennas (1, 2) and
said second transmit/receive circuit (SW3, 13, 14) selects a signal of a higher signal level of receive signals from said first and second antennas (1, 2) and generates receive speech data on the basis of the selected receive signal.
